(19) Europäisches Patentamt
European Patent Office
Office européen des brevets

(11) Veröffentlichungsnummer : **0 031 532**
**B1**

(12) **EUROPÄISCHE PATENTSCHRIFT**

(45) Veröffentlichungstag der Patentschrift : **13.06.84**

(51) Int. Cl.³ : **B 01 D 19/04**, C 08 G 77/44, C 11 D 3/00

(21) Anmeldenummer : **80107891.6**

(22) Anmeldetag : **13.12.80**

(54) **Verfahren zur Herstellung eines Polysiloxan-Blockpolymerisats sowie dessen Verwendung als Schauminhibitor.**

(30) Priorität : **24.12.79 DE 2952287**

(43) Veröffentlichungstag der Anmeldung : **08.07.81 Patentblatt 81/27**

(45) Bekanntmachung des Hinweises auf die Patenterteilung : **13.06.84 Patentblatt 84/24**

(84) Benannte Vertragsstaaten : **AT BE CH DE FR GB IT LI NL**

(56) Entgegenhaltungen :
**DE-A- 2 506 203**
**DE-A- 2 646 127**
**US-A- 3 235 509**

**Die Akte enthält technische Angaben, die nach dem Eingang der Anmeldung eingereicht wurden und die nicht in dieser Patentschrift enthalten sind.**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Hempel, Hans Ulrich, Dr.**
**Wiesengrund 5**
**D-5063 Overath/Vilkerath (DE)**
Erfinder : **Schmadel, Edmund, Dr.**
**Hüschelrath 9**
**D-5653 Leichlingen 1 (DE)**
Erfinder : **Reuter, Herbert, Dr.**
**Am Jägersteig 6**
**D-4010 Hilden (DE)**
Erfinder : **Vogt, Günther, Dr.**
**Kokenstrasse 20**
**D-4154 Tönisvorst 2 (DE)**

**EP 0 031 532 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung ist ein Verfahren zur Herstellung eines neuen Polysiloxan-öl-Polysiloxanharz-Blockpolymerisates sowie dessen Verwendung als Schauminhibitor, insbesondere in Wasch- und Reinigungsmitteln.

Entschäumungsmittel auf Silikonbasis bestehen bekanntlich aus alkyl- beziehungsweise arylsubstituierten Polysiloxanen und kolloidaler Kieselsäure. Die Wirksamkeit dieser Entschäumer hängt wesentlich von ihrer Stabilität in der zu entschäumenden Lösung und damit von ihrer Vorbehandlung ab.

Aus der US-PS 3 113 930 ist ein Verfahren zur Herstellung stabiler Polysiloxan-Entschäumer bekannt, bei dem die verwendete feinteilige Kieselsäure zunächst mit niedermolekularen Siloxanen, wie Octamethylcyclotetrasiloxan oder Tetradecamethylhexasiloxan durch Erhitzen auf Temperaturen oberhalb 350 °C « silaniert » und anschließend in Dimethylpolysiloxan-Öl suspendiert und mehrere Stunden auf Temperaturen von ca. 200 °C erhitzt wird. Die erhaltenen Entschäumer sind in alkalischen Lösungen stabil. Gemäß US-PS 3 235 509 werden Lewis-Säuren als Kondensationskatalysatoren während des Erhitzens zugesetzt, wobei sich eine vorherige Hydrophobierung der Kieselsäure erübrigt. Die DE-AS 17 69 940 empfiehlt für den gleichen Zweck alkalische Katalysatoren, zum Beispiel Alkali- beziehungsweise Tetraalkylammoniumhydroxide. Der Katalysator wirkt bei diesem Verfahren nur an der Grenzfläche zwischen Polysiloxan und Füllstoff, und es kommt nicht zu Spaltungs- und Polymerisationsreaktionen.

Ein anderer Weg wird in der DE-AS 16 19 859 (US-PS 3 455 839) beschritten. Zur Herstellung stabiler Schaumverhütungsmittel werden Gemische aus (I) Dimethylpolysiloxanen, die eine Viskosität von 20 bis 1 500 cSt/25 °C aufweisen, (II) harzartigen, aus $(CH_3)_3SiO_{1/2}$- und $SiO_2$-Einheiten im Verhältnis 0,6 : 1 bis 1,2 : 1 aufgebauten Organopolysiloxanen und (III) Kieselsäure-Aerogelen hergestellt, indem man die Einzelkomponenten in beliebiger Reihenfolge miteinander bei Raumtemperatur oder Temperaturen bis 170 °C miteinander verrührt. Katalysatoren werden nicht angewendet, so daß es lediglich zu einer Fixierung auf der Kieselsäure, nicht jedoch zu einer Vernetzungsreaktion zwischen dem Dimethylpolysiloxan und dem harzartigen Polysiloxan kommt. Die Verfahrensprodukte bestehen daher im wesentlichen aus Gemischen und nicht aus Blockpolymerisaten.

Die vorstehend beschriebenen Schauminhibitoren sind zwar in wäßrigen Alkali- beziehungsweise Tensidlösungen wirksam und so hinreichend stabil, so daß innerhalb des Anwendungszeitraumes, beispielsweise während eines Wasch- und Reinigungsprozesses keine Einbuße an schauminhibierender Wirkung eintritt. Vermischt man jedoch die Inhibitoren mit in üblicher Weise zusammengesetzten, beispielsweise Alkalien und Tenside enthaltenden Waschmitteln, so geht mit fortschreitender Lagerzeit ihre Wirkung mehr oder weniger stark zurück, so daß nach einer mehrwöchigen Lagerung der Mittel Schaumprobleme bei ihrer Anwendung auftreten können. Dieser Wirkungsverlust ist noch größer, wenn man die Schauminhibitoren — im Interesse einer homogenen Verteilung im Waschmittel — dem pastenförmigen Waschmittelansatz (Slurry) zumischt und zusammen mit den übrigen Waschmittelbestandteilen versprüht.

Zur Vermeidung einer schädlichen Wechselwirkung des Polysiloxan-Entschäumers mit den alkalischen Bestandteilen eines Reinigungsmittels schlägt zum Beispiel die DE-OS 20 50 768 vor, zunächst die Polysiloxane in einer wäßrigen Lösung eines nichtionischen Tensids zu emulgieren und diese Emulsion den alkalihaltigen Mitteln zuzusetzen. Gemäß DE-OS 22 32 262 werden die Organopolysiloxane zunächst auf Natriumtripolyphosphat aufgebracht und dieses Vorgemisch anschließend mit den übrigen Waschmittelbestandteilen vereinigt. In der DE-OS 23 38 468 werden die Wechselwirkungen zwischen den Schauminhibitoren und den in Wasch- und Reinigungsmitteln enthaltenen Tensiden für den Rückgang der schaumdämpfenden Wirkung verantwortlich gemacht und vorgeschlagen, die Polysiloxane auf eine Trägersubstanz aufzubringen und die erhaltenen Granulate zusätzlich mit einem für Tenside undurchdringlichen Hüllmaterial zu versehen. Zu den für diese Arbeitsweise vorgeschlagenen Polysiloxanen zählen vorzugsweise Gemische aus Polydimethylsiloxanen, Siloxanharzen und silanierter Kieselsäure, die somit den Verfahrensprodukten gemäß DE-AS 16 19 859 entsprechen.

Der Nachteil der angeführten Verfahren beziehungsweise Verfahrensprodukte besteht darin, daß sie nicht auf möglichst einfache Weise, beispielsweise durch Einbringen in den Waschmittelslurry und nachfolgendes Versprühen, in dem Waschmittel homogen verteilt werden können. Vielmehr sind mehrstufige Granulier- und Mischverfahren erforderlich, um zu verhindern, daß die Wirkung der Schauminhibitoren bei der Herstellung und Lagerung der Mittel nachläßt. Besondere Probleme ergeben sich hinsichtlich der letzten Mischstufe, nämlich der homogenen Einarbeitung der vergleichsweise geringen Menge an siloxanhaltigem Pulvervorgemisch in die Hauptmenge des Waschmittels. Ein intensives Mischen oder Vermahlen würde zwangsläufig zu schlechteren Pulverqualitäten infolge Staubbildung und Zerstörung der Hohlkugelstruktur der sprühgetrockneten Pulveranteile führen, während andererseits Inhomogenitäten Schaumprobleme bei der Anwendung bedingen können.

Die aufgezeigten Nachteile werden durch die vorliegende Erfindung behoben. Gegenstand der Erfindung ist ein Verfahren zur Herstellung eines als Schauminhibitor geeigneten Polysiloxan-Blockpolymerisates, das dadurch gekennzeichnet ist, daß man ein Gemisch aus

A) 100 Gewichtsteilen eines bei 20 °C flüssigen Polydimethylsiloxans,

B) 2 bis 20 Gewichtsteilen eines räumlich vernetzten Polysiloxanharzes mit einem Molekulargewicht

von 1 000 bis 10 000, das aus Strukturelementen der allgemeinen Formel

$$O_{1/2} - \overset{\displaystyle R}{\underset{\displaystyle Y}{Si}} - X$$

besteht, worin R zu 40 bis 100 Mol-% aus einem Phenyl-, Phenylethyl- oder Alkylrest mit 2 bis 8 C-Atomen und zu 0 bis 60 Mol-% aus einem $CH_3$-Rest, X und Y unabhängig voneinander aus den Resten R, OH, $O_{1/2}$, $CH_3$ oder $OC_4H_{2n-1}$ mit n = 1 bis 4 bestehen, mit der Maßgabe, daß der Anteil der OH-Gruppen 0,1 bis 10 Gew.-%, bezogen auf das Polysiloxanharz, beträgt,
in Gegenwart einer Lewis-Säure oder eines basischen Stoffes als Katalysator und gegebenenfalls einem organischen, mit den Reaktionspartnern nicht reaktionsfähigen Lösungsmittels auf Temperaturen oberhalb 80 °C erhitzt, bis die Viskosität nach Durchlaufen einer Induktionsperiode stetig ansteigt und einen Wert von mindestens 200 mPa · s (20 °C) erreicht hat, worauf man das Blockpolymerisat mit

C) 0,5 bis 15 Gewichtsteilen eines Siliciumdioxid-Aerogels, das vorzugsweise silaniert ist, in an sich bekannter Weise vermischt und erhitzt.

Als flüssige Polydimethylsiloxane (Reaktionskomponente A) eignen sich in erster Linie cyclische, 3 bis 6 oder auch mehr Siloxangruppen aufweisende Polydimethylsiloxane, wie Hexamethylcyclotrisiloxan, Octamethylcyclotetrasiloxan, Decamethylcyclopentasiloxan, Dodecamethylcyclohexasiloxan und deren Gemische. Geeignet sind ferner lineare Polydimethylsiloxan-α, ω-diole mit durchschnittlich 5 bis 100, vorzugsweise 30 bis 80 $(CH_3)_2SiO$-Einheiten sowie Polydimethylsiloxangemische, wie sie nach der Hydrolyse von Dimethyldichlorsilan anfallen. Solche Gemische bestehen beispielsweise zu 30 bis 80 Gewichtsprozent aus cyclischen und zu 20 bis 70 Gewichtsprozent aus den beschriebenen linearen Polydimethylsiloxanen.

Die Polysiloxanharze (Reaktionskomponente B) sind bekannte Verbindungen, die bei der Hydrolyse von Phenyl-, Phenylethyl- oder Alkyltrichlorsilanen beziehungsweise deren Co-Hydrolyse mit Dimethylchlorsilanen entstehen. Das Phenylethyltrichlorsilan ist durch Anlagerung von Styrol an Trichlorsilan zugänglich. Bei der Hydrolyse bilden sich räumlich vernetzte Harze, die einen Gehalt an freien, reaktionsfähigen Hydroxylgruppen aufweisen. Wird die Hydrolyse in Gegenwart niederer Alkohole der Formel $C_nH_{2n-1}OH$ durchgeführt, so können sich außerdem Hydroxyalkylreste ausbilden, die bei der erfindungsgemäß durchgeführten Blockpolymerisation ebenfalls reaktionsfähig sind.

Das Molekulargewicht der Polysiloxanharze (B) beträgt 1 000 bis 10 000, vorzugsweise 1 200 bis 5 000.

Als besonders geeignet haben sich die folgenden Polysiloxanharze erwiesen :

$B_1$) Phenyl-methyl-polysiloxanharze mit einem Anteil von 1 bis 6 Gew.-%, insbesondere 2 bis 5 Gew.-% an Hydroxylgruppen und einem Molverhältnis von Phenyl- zu Methylgruppen von 2 : 3 bis 10 : 1, insbesondere 1 : 1 bis 5 : 1, erhältlich durch Co-Hydrolyse von Phenyltrichlorsilan und Dimethyldichlorsilan.

$B_2$) Phenylethyl-polysiloxanharze mit einem Anteil von 0,5 bis 10 Gew.-%, insbesondere 1 bis 5 Gew.-% an Hydroxylgruppen, erhältlich durch Hydrolyse von Phenylethyltrichlorsilan.

$B_3$) Alkylpolysiloxanharze, in denen die Alkylgruppen verzweigt sind und vorzugsweise 3 bis 8 C-Atome aufweisen, mit einem Anteil von 0,5 bis 8, insbesondere 1 bis 5 Gew.-% an Hydroxylgruppen, erhältlich durch Hydrolyse von Alkyltrichlorsilan. Geeignete Alkylgruppen sind zum Beispiel Isopropyl-, Isobutyl-, Isoamyl- und 2-Ethylhexylgruppen.

$B_4$) Phenylethyl-methyl-polysiloxane beziehungsweise $C_3$-$C_8$-Alkyl-methyl-polysiloxane (mit verzweigtem $C_3$-$C_8$-Alkylrest) mit einem Anteil von 1 bis 6, vorzugsweise 2 bis 5 Gew.-% an Hydroxylgruppen und einem Molverhältnis von Phenylethyl- beziehungsweise $C_3$-$C_8$-Alkylgruppen zu Methylgruppen von 2 : 3 bis 100 : 1, erhältlich durch Co-Hydrolyse von Phenyl-ethyl- beziehungsweise $C_3$-$C_8$-Alkyltrichlorsilan mit Dimethyldichlorsilan.

Anstelle der chlorsubstituierten Silane können bei der Hydrolyse beziehungsweise Co-Hydrolyse auch die entsprechenden alkoxyl-substituierten Siloxane mit $C_1$-$C_4$-Alkoxylresten eingesetzt werden. Im Polysiloxanharz (B) liegt der Anteil derartiger Alkoxylgruppen im allgemeinen unter 1 Mol-%.

Auf 100 Gewichtsteile Polydimethylsiloxan (A) kommen 2 bis 25, vorzugsweise 3 bis 20 und insbesondere 5 bis 15 Gewichtsteile Polysiloxanharz (B) zur Anwendung. Mit steigendem Anteil an (B) sowie zunehmendem Molekulargewicht, verbunden mit einem Viskositätsantieg, nimmt die schauminhibierende Wirkung der Verfahrensprodukte zu. Da aber einerseits die Herstellung der Polysiloxanharze sehr viel aufwendiger ist als die der leichter zugänglichen Polydimethylsiloxane, wird man bestrebt sein, den Anteil an (B) nicht zu hoch zu wählen, zumal — wie noch gezeigt werden wird — der Polymerisationsgrad und, damit verbunden, die Viskosität und Wirksamkeit der Blockpolymeren auf sehr viel einfachere Weise gesteigert und optimiert werden kann.

Da neben der Blockpolymerisation auch eine Homopolymerisation des Polydimethylsiloxans stattfinden kann, können gegebenenfalls zur Steuerung des Polymerisationsgrades noch permethylierte niedermolekulare Siloxane, die einen Kettenabbruch bewirken, wie Hexamethyldisiloxan, Octamethyltrisiloxan oder Dekamethyltetrasiloxan, zugesetzt werden. Ihre Menge richtet sich nach dem beabsichtigten Polymerisationsgrad und kann bis zu 20 Mol-Prozent, vorzugsweise bis zu 10 Mol-Prozent, bezogen auf eingesetzte Reaktionskomponente (A) betragen. In der Mehrzahl der Fälle sind solche Zusätze nicht erforderlich.

Die säuren- oder basenkatalyierte Blockpolymerisation kann, sofern die Reaktionspartner miteinander mischbar sind, in Abwesenheit eines Lösungsmittels erfolgen. Bei Nichtmischbarkeit arbeitet man in Gegenwart eines nicht mit den Reaktionspartnern in Konkurrenzreaktionen eintretenden organischen Lösungsmittels.

Als saure Katalysatoren kommen Lewis-Säuren, wie $AlCl_3$, $BF_3$, $ZnCl_2$, insbesondere jedoch säureaktivierten Bleicherden, zum Beispiel säureaktivierte Alumosilikate vom Montmorillonit-Typ in Frage. Die Bleicherden können, falls erforderlich, durch Filtration oder Zentrifugieren leicht abgetrennt werden. Auf 100 Gewichtsteile an eingesetztem Polydimethylsiloxan (A) kommen zweckmäßigerweise 1 bis 5, insbesondere 2 bis 4 Gewichtsteile Bleicherde zur Anwendung. In Gegenwart organischer Lösungsmittel sind Bleicherden jedoch weniger gut geeignet, so daß in solchen Fällen basische Katalysatoren vorzuziehen sind.

Geeignete basische Katalysatoren sind quartäre Ammoniumbasen mit 1 bis 4 C-Atomen aufweisenden Alkyl- und/oder Hydroxyalkylgruppen, insbesondere Tetramethyl- oder Tetraethylammoniumhydroxid, ferner Alkalihydroxide, insbesondere Kaliumhydroxid. Weitere brauchbare alkalische Katalysatoren sind in der DE-AS 17 69 940 genannt. Es werden solche bevorzugt, die in organischen Lösungsmitteln hinreichend löslich beziehungsweise dispergierbar sind. Ihre Menge, auf 100 Gewichtsteile der Reaktionskomponente (A) bezogen, beträgt 0,001 bis 1, vorzugsweise 0,03 bis 0,2 Gewichtsteile.

Geeignete organische Lösungsmittel sind oberhalb 80 °C siedende Kohlenwasserstoffe, zum Beispiel Paraffinkohlenwasserstoffe (Siedebereich 80 bis 200 °C), Benzol, Toluol, Xylol, Cumol, Tetralin, Dekalin, Methylcyclohexan und p-Menthan, ferner Ester, wie Isopropylacetat, Butylacetat und Glykoldiacetat. Prinzipiell ist auch die Verwendung anderer Lösungsmittel, wie Chlorkohlenwasserstoffe oder hochsiedender Ether möglich, jedoch sind derartige Stoffe wegen ihrer Toxizität (Chlorkohlenwasserstoffe) beziehungsweise möglicher Peroxidbildung (Ether) oder ihrer höheren Gestehungskosten von geringem Interesse. Vorzugsweise werden solche Lösungsmittel verwendet, in denen sich der Katalysator löst, da eine homogene Katalyse die Blockpolymerisation fördert.

Die Viskosität der Blockpolymeren soll bei Ende der Umsetzung mindestens 200 mPa · s (20 °C) betragen. Werden weniger als 10 Gewichtsteile (B) auf 100 Gewichtsteile (A) angewendet, beträgt die Viskosität vorzugsweise wenigstens 400 mPa · s und insbesondere mindestens 500 mPa · s. Bei Einsatz von 10 bis 15 Gewichtsteilen (B) empfiehlt sich eine Viskosität von mehr als 300 mPa · s. Die Viskosität kann durch die Wahl des Lösungsmittels, in dem die Blockpolymerisation durchgeführt wird und insbesondere dessen Menge innerhalb eines weiten Bereiches variiert werden. Eine stärkere Verdünnung führt zu niedrigeren Polymerisationsgraden und dementsprechend geringeren Viskositätsanstiegen, während konzentriertere Lösungen die Bildung höhermolekularer Blockpolymerisate fördert und zu höherviskosen Produkten führt. Pro Gewichtsteil an eingesetztem Ausgangsmaterial (Summe am Reaktionskomponenten A und B) können 0,3 bis 1,5 Volumenteile (20 °C) an Lösungsmittel angewendet werden. Bei Verwendung eines Ausgangsgemisches, in dem auf 100 Gewichtsteile (A) weniger als 10 Gewichtsteile (B) entfallen, werden vorzugsweise weniger als 1,2 und insbesondere weniger als 1 Volumenteil auf 1 Gewichtsteil Ausgangsmaterial (A + B) eingesetzt. Ist der Anteil an (B) im Ausgangsmaterial höher, kann die Menge des Lösungsmittels gesteigert werden.

In jedem Falle soll wenigstens soviel Lösungsmittel anwesend sein, daß die Reaktionskomponenten (A) und (B) in homogener Phase vorliegen. Werden dabei Produkte mit sehr hoher, die Weiterverarbeitung erschwerender Viskosität, beispielsweise einer solchen von mehr als 10 000 mPa · s erhalten, kann die Lösungsmittelmenge über die Mindestmenge, die zur Erreichung einer homogenen Phase erforderlich ist, hinaus erhöht werden. Man hat auf diese Weise die Möglichkeit, die Eigenschaften der Schauminhibitoren den jeweiligen Gegebenheiten anzupassen.

Die Reaktionstemperatur liegt oberhalb 80 °C. Sie ist, sofern man bei atmosphärischem Druck bei der Siedetemperatur des jeweiligen Lösungsmittels arbeitet, von dessen Siedetemperatur abhängig. Temperaturen oberhalb 200 °C sind nicht erforderlich. Vorzugsweise arbeitet man daher bei Temperaturen zwischen 80 und 200 °C, insbesondere 100 bis 160 °C.

Zu Beginn der Reaktion während einer Induktionsperiode, die je nach Temperatur 5 Minuten bis ca. 1 Stunde betragen kann, ist der Viskositätsverlauf uneinheitlich. In diesem Abschnitt ist die Viskosität des Reaktionsgutes zunächst von der Viskosität der Einzelbestandteile abhängig und kann sehr unterschiedliche Werte annehmen. Mit fortschreitender Polymerisation macht sich in zunehmendem Maße der Einfluß des Blockpolymerisats bemerkbar und die Viskosität steigt stetig an und nähert sich einem Grenzwert, der dadurch gegeben ist, daß alle bindungsfähigen Gruppen abgesättigt sind. Für eine optimale Schaumdämpfung ist es aber keineswegs erforderlich, daß alle reaktionsfähigen Gruppen abgesättigt werden, zumal die Reaktionsgeschwindigkeit nach anfänglich schnellerem Verlauf mit fortschreitendem Umsetzungsgrad stetig abnimmt und der weitere Anstieg der Viskosität nur noch sehr langsam verläuft. Es können bereits nach mindestens zweistündiger Erhitzung auf Temperaturen oberhalb 100 °C brauchbare Produkte erhalten werden, jedoch lassen sich deren Eigenschaften durch Verlängern der Erhitzungsperiode auf 4 bis 20 Stunden meist erheblich verbessern. Eine Ausdehnung der

Reaktionszeit über 25 bis 30 Stunden hinaus führt jedoch nicht mehr zu einer wesentlichen Wirkungssteigerung und erübrigt sich daher im allgemeinen. Vorzugsweise beträgt die Erhitzungsperiode im Temperaturbereich von 100 bis 160 °C 6 bis 20 Stunden.

Alkalische Blockpolymerisatoren werden nach beendeter Polymerisation zweckmäßigerweise durch Neutralisation, insbesondere mit organischen Säuren, wie Ameisensäure oder Essigsäure inaktiviert. Soweit Lösungsmittel verwendet wurden, werden diese vor der Weiterverarbeitung abdestilliert.

Als Kieselsäure eignet sich eine solche mit einer Teilchengröße von etwa 6 bis 30 mμ und einer spezifischen Oberfläche von wenigstens 80 $m^2/g$, wie sie beispielsweise durch pyrogene Hydrolyse von Siliciumtetrachlorid erhältlich ist. Vorzugsweise kommt silanierte, beispielsweise durch Vorbehandlung mit Trimethylchlorsilan, Dimethyldichlorsilan oder cyclischen Polydimethylsiloxanen hydrophobierte Kieselsäure zur Anwendung. Gegenüber einer nichtsilanierten Kieselsäure bietet sie den Vorteil einer schnelleren und besseren Homogenisierung. Auf ein aus 100 Gewichtsteilen Polydimethyldisiloxan und 2 bis 20 Gewichtsteilen Polysiloxanharz hergestelltes Blockpolymerisat kommen definitionsgemäß 1 bis 15, vorzugsweise 2 bis 10 Gewichtsteile der vorzugsweise silanierten Kieselsäure zur Anwendung. Das Homogenisieren erfolgt in bekannter Weise unter intensiver mechanischer Bearbeitung des Mischgutes zunächst bei Temperaturen zwischen 20 und bis 100 °C. Während des nachfolgenden Erhitzens auf Temperaturen zwischen 100 und 250 °C, vorzugsweise 120 bis 200 °C wird das Mischen zweckmäßigerweise fortgesetzt. Im allgemeinen reicht eine Erhitzungsdauer von 2 bis 5 Stunden für die Bildung stabiler Addukte aus.

Die erfindungsgemäß hergestellten Blockpolymeren und ihre Gemische beziehungsweise Addukte mit Kieselsäure sind neue Produkte. Die kieselsäurefreien Blockpolymerisate weisen, je nach Wahl und Menge der Ausgangsstoffe sowie der Reaktionsbedingungen Viskositäten von 200 bis 20 000, vorzugsweise von 300 bis 10 000 mPa · s (bei 20 °C) auf. Sie sind homogene, klare Flüssigkeiten.

Ihre erfindungsgemäßen, stabilen Mischungen mit Siliciumdioxid-Aerogelen sind hervorragend als Schauminhibitoren für beliebige Anwendungsgebiete geeignet, wie Papierindustrie, Erdölgewinnung, Zuckerraffination, Textilindustrie, Abwasserbehandlung, in Latex- und Kunstharzdispersionen, Schneidölemulsionen sowie Destillations- und Flotationsverfahren. Sie sind gegenüber Alkalien stabil und werden durch wäßrige Tensid- und Alkalilösungen nicht inaktiviert. Daher lassen sie sich mit besonderem Vorteil in Waschmitteln einsetzen, wobei überraschenderweise ein Einarbeiten in den Waschmittelslurry und anschließendes Versprühen nicht zu einer Wirkungseinbuße führt. In Wasch- und Reinigungsmitteln eingesetzt sind sie um 1 bis 2 Zehnerpotenzen wirksamer als die bisher für diesen Zweck vorgeschlagenen Schauminhibitoren auf Silikonbasis.

Ein weiterer Gegenstand des Schutzbegehrens ist daher die Verwendung der Verfahrensprodukte in Wasch-, Spül-, Reinigungs- und Textilnachbehandlungsmitteln. Von besonderem Interesse sind dabei solche reinigend wirkenden Mittel, die in geschlossenen Spül- und Waschmaschinen mit starker mechanischer Bearbeitung des Reinigungsgutes, zum Beispiel Wasch- und Geschirrspülautomaten, zur Anwendung kommen.

Der Gehalt derartiger Wasch-, Spül-, Reinigungs- und Nachbehandlungsmittel an den erfindungsgemäßen Verfahrensprodukten kann je nach Schaumintensität der anwesenden Wirkstoffe und Ausmaß des beabsichtigten Effektes 0,001 bis 1, vorzugsweise 0,005 bis 0,5 Gewichtsprozent betragen. Wegen der hervorragenden Inhibitorwirkung der Verfahrensprodukte im Vergleich zu bekannten Inhibitoren auf Polysiloxan-Basis kommt man im allgemeinen mit sehr geringen Mengen an Schauminhibitor aus.

Wasch- und Reinigungsmittel der genannten Art enthalten üblicherweise anionische, nichtionische, zwitterionische und gegebenenfalls auch kationische Tenside, Gerüstsalze und Alkalien sowie sonstige, das Wasch- und Reinigungsergebnis verbessernde beziehungsweise die Anwendungseigenschaften des Reinigungsgutes verbessernde Begleitstoffe.

Für Wasch- und Reinigungsmittel geeignete anionische Tenside sind solche vom Sulfonat- oder Sulfattyp, insbesondere Alkylbenzolsulfonate, Olefinsulfonate, Alkylsulfonate und α-Sulfofettsäureester, primäre Alkylsulfate sowie die Sulfate von ethoxylierten, 2 bis 3 Glykolethergruppen aufweisenden höhermolekularen Alkoholen. In Frage kommen ferner Alkaliseifen von Fettsäuren natürlichen oder synthetischen Ursprungs, zum Beispiel die Natriumseifen von Cocos-, Palmkern- oder Talgfettsäuren. Die anionischen Tenside liegen vorzugsweise in Form der Natriumsalze vor. Sofern die genannten anionischen und zwitterionischen Verbindungen einen aliphatischen Kohlenwasserstoffrest besitzen, soll dieser bevorzugt geradkettig sein und 8 bis 22, vorzugsweise 12 bis 18 Kohlenstoffatome aufweisen. In den Verbindungen mit einem araliphatischen Kohlenwasserstoffrest enthalten die vorzugsweise unverzweigten Alkylketten 6 bis 16, insbesondere 10 bis 14 Kohlenstoffatome.

Geeignete nichtionische Tenside sind insbesondere Ethoxylierungsprodukte von gesättigten oder einfach ungesättigten aliphatischen primären Alkoholen mit 12 bis 24, vorzugsweise 12 bis 18 Kohlenstoffatomen und 3 bis 20, insbesondere 4 bis 15 Ethylenglykolethergruppen. Geeignete Alkohole, von denen sich die vorliegenden Ethoxylierungsprodukte ableiten, sind beispielsweise solche natürlichen Ursprungs, wie Cocos- oder Talgfettalkohole beziehungsweise Oleylalkohol, ferner Oxoalkohole oder durch Ethylenpolymerisation gewonnene Synthesealkohole.

Weitere geeignete nichtionische Tenside sind Ethoxylierungsprodukte von sekundären Alkoholen, vicinalen Diolen und Aminoalkoholen mit jeweils 12 bis 18 Kohlenstoffatomen sowie von Alkylphenolen mit 6 bis 12 Kohlenstoffatomen im Alkylrest, wobei die Zahl der Glykolethergruppen ebenfalls 3 bis 20,

vorzugsweise 4 bis 15 beträgt. Die vorstehend genannten ethoxylierten Alkohole, Aminoalkohole und Alkylphenole können auch ganz oder teilweise durch solche ersetzt sein, bei deren Herstellung mit 0,5 bis 3 Mol Propylenoxid pro Mol Ausgangsverbindung und erst in 2. Stufe die in Aussicht genommene Menge an Ethylenoxid angelagert wird.

Gegebenenfalls können auch solche nichtionischen Tenside anwesend sein, die sich von den vorgenannten Verbindungen ableiten und die Ethylenglykol- als auch Propylenglykolethergruppen in anderer Reihenfolge aufweisen, beispielsweise Alkohole mit 10 bis 30 Ethylenglykolethergruppen und 3 bis 30 Propylenglykolethergruppen ; ferner Ethoxylierungsprodukte von Mercaptanen, Fettsäureamiden und Fettsäuren. Brauchbar sind auch die wasserlöslichen, 20 bis 250 Ethylenglykolethergruppen und 10 bis 100 Propylenglykolethergruppen enthaltenden Polyethylenoxidaddukte an Polypropylenglykol, Ethylendiaminopolypropylenglykol und Alkylpolypropylenglykol mit 1 bis 10 Kohlenstoffatomen ind der Alkylkette. Die genannten Verbindungen enthalten üblicherweise pro Propylenglykol-Einheit 1 bis 5 Ethylenglykoleinheiten. Auch nichtionische Verbindungen vom Typ der Aminoxide und Sulfoxide, die gegebenenfalls auch ethoxyliert sein können, sind verwendbar.

Geeignete Gerüstsubstanzen sind Alkalimetall-Polymerphosphate, insbesondere Pentanatriumtriphosphat, ferner Diphosphate und höherkondensierte Phosphate, zum Beispiel Tetraphosphate. Brauchbar sind ferner zum Kationenaustausch befähigte, wasserhaltige Alumosilikate des Kaliums oder insbesondere des Natriums der allgemeinen Formel $(Na_2O)_x \cdot Al_2O_3 \cdot (SiO_2)_y \cdot (H_2O)_z$ mit $x = 0,9$ bis 1,5, $y = 1,3$ bis 4,0 und $z = 1$ bis 6. Diese Aluminosilikate weisen allgemein eine Korngröße von 0,1 bis 20 $\mu$ auf und sind vorzugsweise kristallin.

Zu den Gerüstsalzen zählen ferner Salze von komplexierend wirkenden Aminopolycarbonsäuren, insbesondere Alkalisalze der Nitrilotriessigsäure und Ethylendiaminotetraessigsäure. Geeignet sind ferner die höheren Homologen der genannten Aminopolycarbonsäuren. Auch Salze stickstofffreier, mit Calciumionen Komplexsalze bildender Polycarbonsäuren, wozu auch Carboxylgruppen enthaltende Polymerisate zählen, sind geeignet. Beispiele sind Citronensäure, Weinsäure, Benzolhexacarbonsäure und Tetrahydrofurantetracarbonsäure. Auch Carboxymethylethergruppen enthaltende Polycarbonsäuren sind brauchbar, wie 2,2'-Oxydibernsteinsäure sowie mit Glykolsäure teilweise oder vollständig veretherte mehrwertige Alkohole oder Hydroxycarbonsäuren, beispielsweise Triscarboxymethylglycerin, Biscarboxymethylglycerinsäure, Carboxymethyl-oxybernsteinsäure und carboxymethylierte bzw. oxydierte Polysaccharide. Weiterhin eignen sich die polymeren Carbonsäuren mit einem Molekulargewicht von mindestens 350 in Form der wasserlöslichen Natrium- oder Kaliumsalze, wie Polyacrylsäure, Polymethacrylsäure, Poly-$\alpha$-hydroxyacrylsäure, Polymaleinsäure, Polyitaconsäure, Polymesaconsäure, Polybutentricarbonsäure sowie die Copolymerisate der entsprechenden monomeren Carbonsäuren untereinander oder mit ethylenisch ungesättigten Verbindungen wie Ethylen, Propylen, Isobutylen, Vinylmethylether oder Furan.

Weiterhin können komplexierend wirkende polyphosphonsaure Salze anwesend sein, zum Beispiel die Alkalisalze von Aminopolyphosphonsäuren, insbesondere Aminotri-(methylenphosphonsäure), 1-Hydroxyethan-1,1-diphosphonsäure, Phenylhydroxymethandiphosphonsäure, Methylendiphosphonsäure sowie Salze der höheren Homologen der genannten Polyphosphonsäuren. Auch Gemische der vorgenannten Komplexierungsmittel sind verwendbar.

Zu den sonstigen Bestandteilen, die in den Waschmitteln enthalten sein können, zählen Waschalkalien, Neutralsalze, Vergrauungsinhibitoren, optische Aufheller, Stabilisatoren wie Magnesiumsilikat, avivierend wirkende Stoffe sowie Farbstoffe, ferner Zusätze, welche die Versprühbarkeit verbessern, zum Beispiel Alkalisalze der Toluol-, Xylol- oder Cumolsulfonsäure.

Geeignete Waschalkalien sind Alkalicarbonate, -bicarbonate, -borate und -silikate mit einem $Na_2O : SiO_2$-Verhältnis von 1 : 1 bis 1 : 3,5. Als Neutralsalze kommen Natriumsulfat und Natriumchlorid in Betracht.

Als Vergrauungsinhibitoren eignen sich insbesondere Carboxymethylcellulose sowie Cellulosemischether, die wechselnde Mengen an Carboxymethyl-, Methyl- und/oder Hydroxyethyl-, Hydroxypropyl- und Hydroxybutylgruppen aufweisen, insbesondere Methylhydroxypropylcellulose und Methylhydroxybutylcellulose, ferner kolloidal in Wasser lösliche Polymere beziehungsweise Copolymere des Vinylalkohols, Vinylpyrrolidons, Acrylamids und Acrylnitrils.

Geeignete optische Aufheller sind die Alkalisalze der 4,4-Bis-(2''-anilino-4''-morpholino-1,3,5-triazinyl-6''-amino)-stilben-2,2'-disulfonsäure oder gleichartig aufgebaute Verbindungen, die anstelle der Morpholinogruppe eine Diethanolaminogruppe, eine Methylaminogruppe oder eine $\beta$-Methoxyethylaminogruppe tragen. Weiterhin kommen als Aufheller für Polyamidfasern solche vom Typ der Diarylpyrazoline in Frage, beispielsweise 1-(p-Sulfonamidophenyl)-3-(p-chlorphenyl)-$\Delta^2$-pyrazolin sowie gleichartig aufgebaute Verbindungen, die anstelle der Sulfonamidogruppe eine Carboxymethyl- oder Acetylaminogruppe tragen. Brauchbar sind ferner substituierte Aminocumarine, zum Beispiel das 4-Methyl-7-dimethylamino- oder das 4-Methyl-7-diethylaminocumarin.

Weiterhin sind als Polyamidaufheller die Verbindungen 1-(2-Benzimidazolyl)-2-(1-hydroxyethyl-2-benzimidazolyl)-ethylen und 1-Ethyl-3-phenyl-7-diethylamino-carbostyryl brauchbar. Als Aufheller für Polyester- und Polyamidfasern sind die Verbindungen 2,5-Di-(2-benzoxyzolyl)-thiophen, 2-(2-Benzoxyzolyl)-naphto-[2,3-b]-thiophen und 1,2-Di-(5-methyl-2-benzoxyzolyl)-ethylen geeignet. Weiterhin können Aufheller vom Typ der substituierten Diphenylstyryle anwesend sein. Auch Gemische der vorgenannten

Aufheller können verwendet werden.

Eine gegebenenfalls anwesende weitere Pulverkomponente enthält vorzugsweise eine Perverbindung, beispielsweise Natriumpercarbonat, insbesondere jedoch Natriumperborattetrahydrat.

Weiterhin können noch zusätzliche Pulverkomponenten anwesend sein, die beispielsweise Enzyme oder Bleichaktivatoren enthalten können. Zum Schutz gegen Zersetzung oder Wechselwirkungen mit den übrigen Pulverbestandteilen des Waschmittels können die Enzyme und Bleichaktivatoren mit in Wasser löslichen beziehungsweise dispergierbaren Hüllsubstanzen überzogen sein.

Die Waschmittel werden vorteilhaft durch Sprühtrocknung in bekannter Weise aus einem wäßrigen Slurry hergestellt, wobei die erfindungsgemäßen Verfahrensprodukte unmittelbar im Slurry dispergiert und mit diesem zusammen versprüht werden können. Derartige Sprühpulver weisen üblicherweise ein Litergewicht von 300 bis 600 g auf. Gegebenenfalls können die Wasch- und Reinigungsmittel auch durch bekannte Granulierverfahren hergestellt werden. Auch in diesem Falle können die erfindungsgemäßen Verfahrensprodukte unmittelbar oder im Gemisch mit Tensiden und anderen Bestandteilen in die Granulate eingearbeitet werden, was die Verarbeitung erheblich vereinfacht.

Die in der angegebenen Weise hergestellten pulverförmigen Waschmittel zeichnen sich durch ein günstiges Schaumverhalten aus. Die geringen Mengen an Blockpolymeren, die für eine weitgehende Schauminhibierung erforderlich sind, haben im Gegensatz zu den weniger wirksamen bekannten Polysiloxanentschäumern keinen negativen Einfluß auf die Benetzungseigenschaften der Pulvergemische, weshalb auch keine Schwierigkeiten im Einspülverhalten bei der Anwendung in Wasch- und Spülautomaten zu befürchten sind. Ein weiterer Vorteil ist, daß die schaumdämpfende Wirkung der Siloxane bei der Lagerung der Pulvergemische keine Einbußen erleidet. Auch bei wiederholter Anwendung der Mittel tritt keine Vergrauung der Gewebe beziehungsweise keine Beaufschlagung der Waschmaschinenteile mit einem nur sehr schwer entfernbaren Siloxanfilm ein.

Zwecks Konfektionierung für beliebige Einsatzgebiete können die erfindungsgemäßen Polysiloxan-Blockpolymerisate in Lösungsmitteln gelöst oder unter Zusatz üblicher Emulgatoren in Emulsionen überführt werden.

## Beispiele

Die im folgenden aufgeführten Beispiele 1 bis 28 betreffen die Herstellung der Schauminhibitoren. Die anwendungstechnischen Beispiele sind in Tabellen 5 und 6 zusammengestellt. Die Viskosität der Verfahrensprodukte wurde bei 20 °C bestimmt.

### Beispiel 1

Die Reaktionskomponente (A) bestand aus einem handelsüblichen Polydimethylsiloxan, in dem etwa 65 Gewichtsprozent als cyclische Verbindungen und etwa 35 Gewichtsprozent als lineare Polydimethylsiloxane mit etwa 15 bis 100 $(CH_3)_2SiO$-Gruppen vorlagen. Die Reaktionskomponente (B) bestand aus einem Phenyl-methyl-siloxanharz mit einer auf osmometrischem Wege gemessenen mittleren Molmasse von 1 600, einem Molverhältnis von Phenyl- zu Methyl-Gruppen von 1 : 0,8 und einem Gehalt an Hydroxylgruppen von 3,3 Gew.-%.

6 600 g des Polydimethylsiloxans (A) und 660 g Methylphenylsiloxanharz (B) wurden in 5 500 ml Toluol gelöst, mit 7 g Tetramethylammoniumhydroxid versetzt und 16 Stunden in einer Stickstoffatmosphäre unter ständigem Rühren auf 111 °C erhitzt. Anschließend wurden der Katalysator durch Zusatz von 60 ml reiner Essigsäure neutralisiert und das Lösungsmittel sowie die überschüssige Essigsäure abdestilliert. Nach Entfernung flüchtiger Anteile bei 180 °C im Vakuum wurde das erhaltene flüssige Blockpolymerisat zwecks Entfernung des Tetramethylammoniumacetats filtriert. Das Polymere war klar und homogen und wies eine Viskosität von 952 mPa · s auf.

Wurde zum Vergleich die Umsetzung ohne Anwesenheit des Katalysators durchgeführt, so fiel nach Abdestillieren des Toluols das eingesetzte Polysiloxanharz praktisch unverändert aus. Es hatte demnach keine Blockpolymerisation stattgefunden.

Zur Herstellung eines Schauminhibitors wurde das Blockpolymerisat mit 3 Gewichtsprozent einer silanierten Kieselsäure, erhältlich durch Umsetzung eines Kieselsäure-Aerogels mit Dimethyldichlorsilan, homogen vermischt und unter Rühren 3 Stunden auf 200 °C unter Stickstoff erhitzt. Das erhaltene Produkt wies eine Viskosität von 2 390 mPa · s (20 °C) auf.

### Beispiel 2

220 g des in Beispiel 1 verwendeten Polydimethylsiloxans, 22 g des dort verwendeten Methylphenylsiloxanharzes und 235 mg Tetramethylammoniumhydroxid wurden unter Rühren in 180 ml Toluol unter Stickstoff auf 111 °C erhitzt. Die Aufarbeitung erfolgte wie in Beispiel 1 angegeben. Die jeweilige Reaktionszeit und die Viskosität bei 20 °C des noch nicht mit silaniertem Siliciumdioxid versetzten Blockpolymeren sind in Tabelle 1 angeführt.

Tabelle 1

| Beispiel | Erhitzungsdauer (Std.) | Viskosität (mPa·s) |
|---|---|---|
| 2a | 2 | 444 |
| 2b | 4 | 497 |
| 2c | 7,5 | 852 |
| 2d | 16,0 | 952 |

Nach Einarbeiten von 3 Gewichtsprozent silanierter Kieselsäure ergab sich eine mit steigender Viskosität zunehmende Entschäumerwirkung (vgl. Anwendungsbeispiele).

Beispiele 3 bis 13

Diese Beispiele zeigen den Einfluß der Lösungsmittelmenge und des Harzanteils auf die Viskosität der Verfahrensprodukte.

100 g Octamethylcyclotetrasiloxan (A) wurden mit wechselnden Mengen des in Beispiel 1 beschriebenen Methylphenylsiloxanharzes (B) und Toluol in Gegenwart von 100 mg Tetramethylammoniumhydroxid, wie in Beispiel 1 beschrieben, umgesetzt. Nach dem Abtrennen des Lösungsmittels und des neutralisierten Katalysators wurde die Viskosität des Produktes bestimmt, eine weitere Viskositätsbestimmung erfolgte nach dem Einarbeiten der silanierten Kieselsäure. Die eingesetzten Mengen an Harz und Toluol sowie die Ergebnisse sind in Tabelle 2 aufgeführt.

Tabelle 2

| Beispiel | Harz (g) | Toluol (ml) | Viskosität (mPa·s) ohne $SiO_2$ | mit $SiO_2$ |
|---|---|---|---|---|
| 3 | 5 | 83 | 977 | 2080 |
| 4 | 7,5 | 104 | 333 | 895 |
| 5 | 7,5 | 83 | 817 | 1620 |
| 6 | 10 | 104 | 291 | 644 |
| 7 | 10 | 83 | 922 | 2330 |
| 8 | 12,5 | 125 | 213 | 474 |
| 9 | 12,5 | 104 | 348 | 683 |
| 10 | 12,5 | 83 | 1010 | 2280 |
| 11 | 15 | 125 | 201 | 607 |
| 12 | 15 | 104 | 359 | 765 |
| 13 | 15 | 83 | 779 | 1640 |

Beispiele 14 bis 21

Als Komponente (A) diente Octamethylcyclotetrasiloxan, als Komponente (B) ein Siloxanharz, hergestellt durch Umsetzung von Styrol mit Trichlorsilan und anschließende Hydrolyse in einem Gemisch von Toluol und Wasser. Die in den Strukturelementen enthaltenen Reste R wiesen demnach die folgende Struktur auf:

$-CH_2-CH_2-C_6H_5-$ und 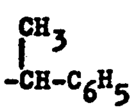

Der Gehalt an Hydroxylgruppen betrug 5 Gew.-%.

Das Harz wies ein mittleres Molekulargewicht von 4 400 auf.

Jeweils 100 Gewichtsteile Octamethylcyclotetrasiloxan wurden mit wechselnden Mengen Toluol und Siloxanharz und 0,13 Gewichtsteilen Tetramethylammoniumhydroxid in einer Stickstoffatmosphäre 18 Stunden unter Rühren auf 111 °C erhitzt. Die Aufarbeitung erfolgte wie in Beispiel 1 angegeben. Die Ergebnisse sind in Tabelle 3 zusammengefaßt.

Tabelle 3

| Beispiel | Harz (Gew.-Teile) | Toluol (Vol.-Teile) | Viskosität (mPa·s) ohne $SiO_2$ | mit $SiO_2$ |
|---|---|---|---|---|
| 14 | 10 | 73 | 762 | 1610 |
| 15 | 10 | 59 | 1410 | 7450 |
| 16 | 12,5 | 88 | 341 | 746 |
| 17 | 12,5 | 73 | 600 | 1170 |
| 18 | 12,5 | 59 | 1460 | 3980 |
| 19 | 15 | 88 | 276 | 611 |
| 20 | 15 | 73 | 524 | 1130 |
| 21 | 15 | 59 | 1360 | 5090 |

Wurden die Versuche in Abwesenheit von Siloxanharz unter sonst identischen Bedingungen wiederholt, so trat kurz nach Erreichen einer Temperatur von 111 °C Gelbildung ein. Die entstandenen Produkte waren nicht mehr rühr- und fließfähig.

Beispiele 22 bis 27

Die folgenden Beispiele wurden unter Verwendung verschiedener Lösungsmittel durchgeführt.

Zu diesem Zweck wurden 100 g Octamethylcyclotetrasiloxan, 10 g des in Beispiel 1 verwendeten Methylphenylsiloxanharzes und 100 mg Tetramethylammoniumhydroxid in jeweils 104 ml eines Lösungsmittels (vgl. Tabelle 4) während 16 Stunden unter Rühren in einer Stickstoffatmosphäre auf 110° bis 112 °C erhitzt. Bei Verwendung von Benzinfraktionen (die Zahlenangaben bezeichnen den Siedebereich in °C) als Lösungsmittel waren die Lösungen anfänglich durch ungelösten Katalysator etwas getrübt. Diese Trübung ging im Verlauf einiger Stunden zurück. Nach der gemäß Beispiel 1 durchgeführten Aufarbeitung wurden Blockpolymere mit den in Tabelle 4 angegebenen Viskositäten (in mPa · s) erhalten.

Tabelle 4

| Beispiel | Lösungsmittel | Viskosität (ohne $SiO_2$) |
|---|---|---|
| 22 | Toluol | 305 |
| 23 | Benzin 100/140 | 512 |
| 24 | Benzin 140/200 | 269 |
| 25 | Xylol | 1150 |
| 26 | Cumol | 757 |
| 27 | Butylacetat | 414 |

Die Blockpolymeren wurden, wie in Beispiel 1 beschrieben, aufgearbeitet und mit silanierter Kieselsäure homogenisiert.

Anwendungstechnische Beispiele

Zur Prüfung des Schaumverhaltens wurden die erfindungsgemäß hergestellten Inhibitoren in verschiedener Weise in Waschmittel eingearbeitet. Die Schaumeigenschaften dieser Waschmittel wurden

unter praxisnahen Bedingungen in einer handelsüblichen Waschmaschine mit horizontal angeordneter Trommel bei Temperaturen zwischen 30° und 95 °C geprüft. Hierzu wurde die Maschine mit 3,5 kg sauberer Füllwäsche (Baumwolle) beschickt. Die Waschmittelkonzentration betrug 7,5 g und die Wasserhärte 16° dH. Die jeweilige Schaumhöhe wurde durch das Sichtglas der Fronttüre kontrolliert und wie folgt benotet :

| | |
|---|---|
| kein Schaum | = 0 |
| 1/4 der Sichtglashöhe | = 1 |
| 1/2 der Sichtglashöhe | = 2 |
| 3/4 der Sichtglashöhe | = 3 |
| 4/4 der Sichtglashöhe | = 4 |
| Schaum im Einfüllstutzen | = 5 |
| Überschäumen | = 6 |

Die Zusammensetzung des Waschmittels lautete (in Gewichtsprozent) :

8,0 n-Dodecylbenzolsulfonat (Na-Salz)
2,2 Na-Seife (Talg : Cocos = 4 : 1)
2,5 Talgalkohol + 5 EO
1,9 Talgalkohol + 14 EO
20,0 Na-Tripolyphosphat
20,0 Na-Alumosilikat (Kationenaustauscher)
3,0 Na-Silikat ($Na_2O$ : $SiO_2$ = 1 : 3)
2,1 Mg-Silikat
0,3 EDTA
0,9 Na-Carboxymethylcellulose
0,3 optischer Aufheller
10,3 Na-Sulfat
20,0 Na-Perborat-tetrahydrat
Rest Wasser.

Mit Ausnahme des Perborats, das nachträglich dem Pulver zugemischt wurde, wurden alle Bestandteile in einen Slurry eingearbeitet und sprühgetrocknet.

In einer 1. Versuchsreihe wurden die Verfahrensprodukte sowie die Vergleichsprodukte auf einem körnigen, porösen, wasserlöslichen Träger adsorbiert, der durch Sprühtrocknen einer wäßrigen Tripolyphosphatlösung (Wassergehalt 35 Gew.%) erhalten worden war und ein Schüttgewicht von 520 g und eine Korngröße von 0,1 bis 1,6 mm aufwies. Das Adsorbat mit einem Gehalt an 7,5 g Schauminhibitor und 92,5 g Trägersubstanz wurde in wechselnden Mengen mit dem Waschpulver gleichmäßig vermischt. In einer 2. Versuchsreihe wurden die Schauminhibitoren in den Slurry eingearbeitet und mit diesem zusammen versprüht.

Als Vergleichsprodukte dienten käufliche Schauminhibitoren, und zwar « SAG 100 » der Union Carbide Corp. (als Vergleichsprodukt $V_1$ bezeichnet) und « Q2-3008 » der Dow Corning Corp. (Vergleichsprodukt $V_2$), die als für Waschmittel als besonders geeignet gelten. Es handelt sich dabei nach Kenntnis der Anmelderin um Siliciumdioxid enthaltende Polydimethylsiloxane. Weitere Vergleichsprodukte wurden wie folgt dargestellt.

Vergleichsprodukt $V_3$

7 850 eines Dimethylpolysiloxans mit einer Viskosität von 420 mPa · s (20 °C) wurden in einer Stickstoffatmosphäre unter Rühren auf 100 °C erhitzt, mit 1 570 eines Polysiloxanharzes, das aus $(CH_3)_3$-$SiO_{1/2}$- und $SiO_2$-Einheiten im Verhältnis 0,67 : 1 aufgebaut war, versetzt und zwecks Homogenisierung weitere 3,5 Stunden bei 100 °C verrührt. Nach Zusatz von 377 eines Kiesel-/27 säure-Aerogels (Aerosil R 972®) wurde das Gemisch unter fortgesetztem Rühren weitere 5 Stunden auf 180 °C erhitzt. Die Viskosität des Verfahrensproduktes betrug 3 130 mPas · s.

Herstellung und Zusammensetzung entsprechen den Angaben der DE-AS 16 19 859 beziehungsweise US-PS 3 455 839.

Vergleichsprodukt $V_4$

Es wurde ein Gemisch verwendet, das durch 16-stündiges Erhitzen von Polydimethylsiloxan und Methylphenylsiloxanharz in Toluol bei Abwesenheit eines Katalysators entsprechend dem Vergleichsversuch zu Beispiel 1 erhalten und anschließend mit 3 Gew.% silanierter Kieselsäure bei 200 °C homogenisiert worden war.

Die Beispiele sind in der Tabelle 5, die Vergleichsversuche in Tabelle 6 zusammengefaßt.

Die Ergebnisse zeigen, daß die erfindungsgemäß hergestellten Schauminhibitoren erheblich wirksamer sind als die bekannten Mittel, insbesondere bei sehr niedrigen Konzentrationen. Darüber hinaus bleibt ihre volle Wirksamkeit auch nach einer Sprühtrocknung erhalten, während die bekannten Schauminhibitoren auf Siliconbasis unter diesen Bedingungen einen erheblichen Wirkungsverlust erleiden. Bei Einsatz sehr geringer Mengen ist die Wirkung der erfindungsgemäßen Blockpolymeren nach dem Versprühen sogar noch größer als bei üblichem Zumischen, was möglicherweise auf die homogenere Verteilung der in sehr geringer Menge vorliegenden Schauminhibitoren im gesprühten Pulver zurückzuführen ist. Eine vergleichbare homogene und reproduzierbare Verteilung ist bei einem Vermischen vorgefertigter Pulver trotz des höheren Verfahrensaufwandes nicht zu erreichen.

Tabelle 5

| Inhibitor gemäß Beispiel | Menge (Gew.%) | Schaumnoten nach Zumischen | | | Schaumnoten nach Sprühtrocknung | | |
|---|---|---|---|---|---|---|---|
| | | 30° | 60° | 95°C | 30° | 60° | 95°C |
| 1 | 0,2 | 0 | 0,5 | 0,5 | 0 | 0,5 | 1 |
| 1 | 0,1 | 0,5 | 1 | 1 | 0,5 | 1 | 1 |
| 1 | 0,05 | 2 | 2 | 1 | 1 | 1 | 1 |
| 1 | 0,01 | 2 | 3 | 3 | 2 | 2 | 2 |
| 2a | 0,1 | 3 | 4 | 4 | - | - | - |
| 2b | 0,1 | 3 | 4 | 3 | - | - | - |
| 2c | 0,1 | 1 | 2 | 2 | - | - | - |
| 2d | 0,1 | 1 | 1,5 | 1 | 1 | 2 | 1 |
| 3 | 0,1 | 1 | 2 | 1 | 1 | 1 | 1 |
| 4 | 0,1 | 2 | 3 | 2 | 2 | 3 | 2 |
| 5 | 0,1 | 0,5 | 1 | 1 | 1 | 1 | 1 |
| 6 | 0,1 | 1 | 2 | 2 | 2 | 3 | 2 |
| 7 | 0,1 | 0,5 | 2 | 1 | 1 | 2 | 1 |
| 8 | 0,1 | 1 | 2 | 2 | 1 | 2 | 2 |
| 9 | 0,1 | 1 | 2 | 1 | 2 | 3 | 2 |
| 10 | 0,1 | 0 | 1 | 0,5 | 1 | 1 | 1 |
| 11 | 0,1 | 2 | 2 | 2 | 1 | 2 | 2 |
| 12 | 0,1 | 1 | 2 | 1 | 1 | 2 | 2 |
| 13 | 0,1 | 0 | 1 | 1 | 1 | 1 | 1 |
| 14 | 0,1 | 1 | 3 | 2 | 2 | 3 | 2 |
| 15 | 0,1 | 1 | 2 | 1 | 1 | 2 | 2 |
| 16 | 0,1 | 2 | 2 | 2 | 1 | 2 | 2 |
| 17 | 0,1 | 1 | 2 | 1 | 1 | 2 | 1 |
| 18 | 0,1 | 0,5 | 1 | 0,5 | 1 | 1 | 1 |
| 19 | 0,1 | 2 | 2 | 1 | 2 | 2 | 2 |
| 20 | 0,1 | 1 | 2 | 2 | 1 | 2 | 2 |
| 21 | 0,1 | 0,5 | 0,5 | 1 | 0,5 | 1 | 1 |
| 22 | 0,1 | 1 | 2 | 2 | 1 | 2 | 2 |
| 23 | 0,1 | 1 | 2 | 2 | 1 | 2 | 2 |
| 24 | 0,1 | 1 | 3 | 2 | 1 | 3 | 3 |
| 25 | 0,1 | 0,5 | 1 | 1 | 0,5 | 1 | 1 |
| 26 | 0,1 | 0,5 | 1 | 1 | 1 | 2 | 2 |
| 27 | 0,1 | 2 | 3 | 2 | 1 | 3 | 2 |

Tabelle 6

| Inhibitor gemäß Vergleich | Menge (Gew.%) | Schaumnoten nach Zumischen 30° | 60° | 95°C | nach Versprühen 30° | 60° | 90° C |
|---|---|---|---|---|---|---|---|
| ohne Inhibitor | - | 6 | 6 | 6 | 6 | 6 | 6 |
| $V_1$ | 0,2 | 1 | 2 | 2 | 3 | 4 | 4 |
| | 0,1 | 2 | 4 | 3 | 4 | 6 | 5 |
| | 0,05 | 3 | 5 | 5 | 6 | 6 | 6 |
| $V_2$ | 0,2 | 1 | 1 | 1 | 3 | 4 | 4 |
| | 0,1 | 1 | 2 | 2 | 4 | 5 | 5 |
| | 0,05 | 2 | 5 | 4 | 4 | 6 | 6 |
| $V_3$ | 0,2 | 0,5 | 1 | 1 | 2 | 4 | 3 |
| | 0,1 | 2 | 3 | 3 | 3 | 6 | 6 |
| | 0,05 | 3 | 5 | 4 | 6 | 6 | 6 |
| $V_4$ | 0,2 | 1 | 2 | 2 | 3 | 4 | 4 |
| | 0,1 | 2 | 3 | 3 | 4 | 6 | 6 |
| | 0,05 | 3 | 5 | 6 | 6 | 6 | 6 |

**Ansprüche**

1. Verfahren zur Herstellung eines als Schauminhibitor geeigneten Polysiloxan-Blockpolymeren, dadurch gekennzeichnet, daß man ein Gemisch aus

A) 100 Gewichtsteilen eines bei 20 °C flüssigen Polydimethylsiloxans,

B) 2 bis 20 Gewichtsteile eines räumlich vernetzten Polysiloxanharzes mit einem Molekulargewicht von 1 000 bis 10 000, das aus Strukturelementen der allgemeinen Formel

$$O_{1/2} - \underset{\displaystyle Y}{\overset{\displaystyle R}{Si}} - X$$

besteht, worin R zu 40 bis 100 Mol.-% aus einem Phenyl-, Phenylethyl- oder Alkylrest mit 2 bis 8 C-Atomen und zu 0 bis 60 Mol.-% aus einem $CH_3$-Rest, X und Y unabhängig voneinander aus den Resten R, OH, $O_{1/2}$, $CH_3$ oder $OC_nH_{2n-1}$ mit n = 1 bis 4 bestehen, mit der Maßgabe, daß der Anteil der OH-Gruppen 0,1 bis 10 Gew.-%, bezogen auf das Polysiloxanharz, beträgt, in Gegenwart einer Lewis-Säure oder eines basischen Stoffes als Katalysator und gegebenenfalls eines organischen, mit den Reaktionspartner nicht reaktionsfähigen Lösungsmittels auf Temperaturen oberhalb 80 °C erhitzt, bis die Viskosität nach Durchlaufen einer Induktionsperiode stetig ansteigt und einen Wert von mindestens 200 mPa · s (20 °C) erreicht hat, worauf man das Blockpolymerisat mit

C) 1 bis 15 Gewichtsteilen eines Siliciumdioxid-Aerogels, das vorzugsweise silaniert ist, in an sich bekannter Weise vermischt und erhitzt.

2. Verfahren nach Anspruch 1, dadurch gekennzeichnet, daß man als Komponente (A) cyclische, 3 und mehr Siloxangruppen aufweisende und/oder lineare, 5 bis 100 Siloxangruppen aufweisende Polydimethylsiloxane einsetzt.

3. Verfahren nach Anspruch 1, dadurch gekennzeichnet, daß man als Komponente (B) Phenylmethyl-polysiloxanharze mit einem Anteil von 1 bis 6 Gew.-% an Hydroxylgruppen und einem Molverhältnis von Phenyl- zu Methylgruppen von 2 : 3 bis 10 : 1 einsetzt.

4. Verfahren nach Anspruch 1, dadurch gekennzeichnet, daß man als Komponente (B) Phenylethyl-polysiloxanharze mit einem Anteil von 0,5 bis 10 Gew.-% an Hydroxylgruppen einsetzt.

5. Verfahren nach Anspruch 1, dadurch gekennzeichnet, daß man als Komponente (B) Alkylpolysiloxanharze mit verzweigten, 3 bis 8 Kohlenstoffatome aufweisenden Alkylgruppen und mit einem Anteil an Hydroxylgruppen von 0,5 bis 8 Gew.-% einsetzt.

6. Verfahren nach Anspruch 1, 4 und 5, dadurch gekennzeichnet, daß man als Komponente (B) Phenylethylmethyl-polysiloxane beziehungsweise $C_3$-$C_8$-Alkylmethylpolysiloxane (mit verzweigten $C_3$-$C_8$-Alkylresten) mit einem Anteil von 1 bis 6 Gew.-% an Hydroxylgruppen und einem Molverhältnis von Phenylethyl- beziehungsweise $C_3$-$C_8$-Alkylgruppen zu Methylgruppen 100 : 1 bis 2 : 3 beträgt.

7. Verfahren nach Anspruch 1 und 3 bis 6, dadurch gekennzeichnet, daß man von Polysiloxanharzen mit einem Molekulargewicht von 1 000 bis 10 000 ausgeht.

8. Verfahren nach Anspruch 1 bis 7, dadurch gekennzeichnet, daß man auf 100 Gewichtsteile der Komponente (A) 3 bis 20 Gewichtsteile der Komponente (B) anwendet.

9. Verfahren nach Anspruch 1 bis 8, dadurch gekennzeichnet, daß man als Katalysator 1 bis 5 Gewichtsteile (bezogen auf 100 Gewichtsteile der Komponente (A)) an säureaktivierter Bleicherde anwendet und in Abwesenheit von Lösungsmitteln arbeitet.

10. Verfahren nach Anspruch 1 bis 8, dadurch gekennzeichnet, daß man als Katalysator quartäre Ammoniumbasen mit 1 bis 4 C-Atome aufweisenden Alkylgruppen oder Alkalihydroxide verwendet und in Gegenwart eines oberhalb 100 °C siedenden Lösungsmittels aus der Klasse der gesättigten aliphatischen und aromatischen Kohlenwasserstoffe und Carbonsäureester arbeitet.

11. Verfahren nach Anspruch 1 bis 10, dadurch gekennzeichnet, daß man bei Verwendung eines Ausgangsgemisches, in dem auf 100 Gewichtsteile (A) weniger als 10 Gewichtsteile (B) entfallen, weniger als 1,2 Volumenteile, insbesondere weniger als 1 Volumenteil an Lösungsmittel, bezogen auf 1 Gewichtsteil (A + B), anwendet.

12. Verfahren nach Anspruch 1 bis 11, dadurch gekennzeichnet, daß man die Kondensation solange fortsetzt, bis die Viskosität des Blockpolymeren bei Einsatz von weniger als 10 Gewichtsteilen (B), bezogen auf 100 Gewichtsteile (A), mindestens 400, vorzugsweise mindestens 500 mPa · s (20 °C) und bei Einsatz von 10 und mehr Gewichtsteilen (B) auf 100 Gewichtsteilen (A) mindestens 300 mPa · s beträgt.

13. Verfahren nach Anspruch 1 bis 12, dadurch gekennzeichnet, daß die Reaktionstemperatur 100 bis 160 °C beträgt.

14. Verfahren nach Anspruch 1 bis 12, dadurch gekennzeichnet, daß die Reaktionszeit 6 bis 20 Stunden beträgt.

15. Mittel, hergestellt nach Verfahren gemäß Anspruch 1 bis 14.

16. Verwendung der Mittel, hergestellt nach Anspruch 1 bis 14, als Schauminhibitoren.

17. Verwendung der Mittel, hergestellt nach Anspruch 1 bis 14, als Schauminhibitor in Wasch-, Spül- und Reinigungsmitteln.

18. Verwendung der Mittel, hergestellt nach Anspruch 1 bis 14, als Schauminhibitor in sprühgetrockneten Waschmitteln.

**Claims**

1. A process for the production of a polysiloxane block polymer suitable for use as a foam inhibitor, characterized in that a mixture of

A) 100 parts by weight of a polydimethyl siloxane liquid at 20 °C,

B) from 2 to 20 parts by weight of a three-dimensionally crosslinked polysiloxane resin having a molecular weight of from 100 to 10,000 and consisting of structural elements corresponding to the following general formula

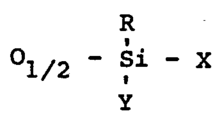

in which from 40 to 100 mole percent of R consists of a phenyl, phenylethyl or alkyl radical containing from 2 to 8 carbon atoms and from 0 to 60 mole percent of a $CH_3$-radical, X and Y independently of one another consist of the radicals R, OH $O_{1/2}$, $CH_3$ or $OC_nH_{2n-1}$ with n = 1 to 4, with the proviso that the proportion of OH-groups amounts to between 0.1 and 10 % by weight, based on the polysiloxane resin, is heated at temperatures above 80 °C in the presence of a Lewis acid or base as catalyst and optionally in the presence of an organic solvent which is inert to the reactants, until the viscosity — after passing through an induction period — steadly increases and reaches a value of at least 200 mPa · s (20 °C), after which the block polymer is mixed with

C) from 1 to 15 parts by weight of a silicon dioxide aerogel, which is preferably silanized, and heated in known manner.

2. A process as claimed in Claim 1, characterized in that cyclic polydimethyl siloxanes containing 3

and more siloxane groups and/or linear polydimethyl siloxanes containing from 5 to 100 siloxane groups are used as component (A).

3. A process as claimed in Claim 1, characterized in that phenyl methyl polysiloxane resins which contain from 1 to 6 % by weight of hydroxyl groups and in which the molar ratio of phenyl to methyl groups in from 2 : 3 to 10 : 1 are used as component (B).

4. A process as claimed in Claim 1, characterized in that phenyl ethyl polysiloxane resins containing from 0.5 to 10 % by weight of hydroxyl groups are used as component (B).

5. A process as claimed in Claim 1, characterized in that alkyl polysiloxane resins containing branched $C_3$-$C_8$-alkyl groups and from 0.5 to 8 % by weight of hydroxyl groups are used as component (B).

6. A process as claimed in Claims 1, 4 and 5, characterized in that phenyl ethyl methyl polysiloxanes or $C_3$-$C_8$-alkyl methyl polysiloxanes (containing branched $C_3$-$C_8$-alkyl radicals), which contain from 1 to 6 % by weight of hydroxyl groups and in which the molar ratio of phenyl ethyl or $C_3$-$C_8$-alkyl groups to methyl groups is from 100 : 1 to 2 : 3, are used as component (B).

7. A process as claimed in Claims 1 and 3 to 6, characterized in that the starting polysiloxane resins have a molecular weight of from 100 to 10,000.

8. A process as claimed in Claims 1 to 7, characterized in that from 3 to 20 parts by weight of component (B) are used to 100 parts by weight of component (A).

9. A process as claimed in Claims 1 to 8, characterized in that from 1 to 5 parts by weight (based on 100 parts by weight of component (A)) of acid-activated fuller's earth is used as catalyst and the reaction is carried out in the absence of solvents.

10. A process as claimed in Claims 1 to 8, characterized in that quaternary ammonium bases containing $C_1$-$C_4$-alkyl groups or alkali hydroxides are used as catalyst and the reaction is carried out in the presence of a solvent boiling above 100 °C from the group comprising saturated aliphatic and aromatic hydrocarbons and carboxylic acid esters.

11. A process as claimed in Claims 1 to 10, characterized in that, where a starting mixture in which there are less than 10 parts by weight of (B) to 100 parts by weight of (A), less than 1.2 parts by volume and, more particularly, less than 1 part by volume of solvent, based on 1 part by weight of (A + B), is used.

12. A process as claimed in Claims 1 to 11, characterized in that the condensation reaction is continued until the viscosity of the block polymer amounts to at least 400 and preferably to at least 500 mPa · s (20 °C) where less than 10 parts by weight of (B) are used per 100 parts by weight of (A) and to at least 300 mPa · s where 10 and more parts by weight of (B) are used per 100 parts by weight of (A).

13. A process as claimed in Claims 1 to 12, characterized in that the reaction temperature is in the range from 100 to 160 °C.

14. A process as claimed in Claims 1 to 12, characterized in that the reaction time amounts to between 6 and 20 hours.

15. Agents produced by the process claimed in Claims 1 to 14.

16. The use of the agents produced in accordance with Claims 1 to 14 as foam inhibitors.

17. The use of the agents produced in accordance with Claims 1 to 14 as foam inhibitors in detergents, dishwashing preparations and cleaners.

18. The use of the agents produced in accordance with Claims 1 to 14 as foam inhibitors in spraydried detergents.

**Revendications**

1. Procédé de fabrication d'un polymère à blocs de polysiloxanes convenant comme inhibiteur de mousse, caractérisé en ce qu'on chauffe un mélange de

A) 100 parties en poids d'un polydiméthylsiloxane liquide à 20 °C,

B) 2 à 20 parties en poids d'une résine de polysiloxane stériquement réticulée ayant un poids moléculaire de 1 000 à 10 000, qui consiste en des éléments structuraux de formule générale

$$O_{1/2} - \underset{\substack{| \\ Y}}{\overset{\substack{R \\ |}}{Si}} - X$$

dans laquelle R consiste à concurrence de 40 à 100 moles % en un radical phényle, phényléthyle ou alcoyle ayant 2 à 8 atomes de carbone et à concurrence de 0 à 60 moles % en un radical $CH_3$, X et Y indépendamment l'un de l'autre consistent en les radicaux R, OH, $O_{1/2}$, $CH_3$ ou $OC_nH_{2n-1}$ avec n = 1 à 4, avec comme condition que la proportion des groupes OH s'élève à 0,1 à 10 % en poids par rapport à la résine de polysiloxane, en présence d'un acide de Lewis ou d'une substance basique comme catalyseur et éventuellement d'un solvant organique non réactif avec les partenaires de réaction, à des températures supérieures à 80 °C, jusqu'à ce que la viscosité, après passage par une période d'induction, augmente constamment et atteigne une valeur d'au moins 200 mPa · s (à 20 °C), après quoi on mélange de manière connue en soi le polymère à blocs avec

C) 1 à 15 parties en poids d'un aérogel de dioxyde de silicium qui, de préférence est silané, et on le chauffe.

2. Procédé selon la revendication 1, caractérisé en ce qu'on utilise comme composant (A) des polydiméthylsiloxanes cycliques présentant 3 groupes siloxane et davantage et/ou linéaires présentant 5 à 100 groupes siloxane.

3. Procédé selon la revendication 1, caractérisé en ce qu'on utilise comme composant (B) des résines de phényl-méthyl-polysiloxane ayant une proportion de 1 à 6 % en poids de groupes hydroxyle et un rapport molaire des groupes phényle à méthyle de 2 : 3 à 10 : 1.

4. Procédé selon la revendication 1, caractérisé en ce qu'on utilise comme composant (B) des résines de phényléthyl-polysiloxane ayant une proportion de 0,5 à 10 % en poids de groupes hydroxyle.

5. Procédé selon la revendication 1, caractérisé en ce qu'on utilise comme composant (B) des résines d'alcoylpolysiloxane avec groupes alcoyle ramifiés présentant 3 à 8 atomes de carbone et avec une proportion de groupes hydroxyle de 0,5 à 8 % en poids.

6. Procédé selon les revendications 1, 4 et 5, caractérisé en ce qu'on utilise comme composant (B) des phényléthyl-méthyl-polysiloxanes ou des alcoyl ($C_3$-$C_8$)-méthylpolysiloxanes (avec radicaux alcoyle ramifiés en $C_3$-$C_8$) ayant une proportion de 1 à 6 % en poids de groupes hydroxyle et un rapport molaire des groupes phényléthyle ou alcoyle ($C_3$-$C_8$) envers les groupes méthyle de 100 : 1 à 2 : 3.

7. Procédé selon les revendications 1 et 3 à 6, caractérisé en ce qu'on part de résines de polysiloxane ayant un poids moléculaire de 1 000 à 10 000.

8. Procédé selon les revendications 1 à 7, caractérisé en ce qu'on emploie pour 100 parties en poids de composant (A) 3 à 20 parties en poids de composant (B).

9. Procédé selon les revendications 1 à 8, caractérisé en ce qu'on utilise comme catalyseur 1 à 5 parties en poids (par 100 parties en poids de composé (A)) de terre décolorante activée à l'acide et l'on opère en l'absence de solvants.

10. Procédé selon les revendications 1 à 8, caractérisé en ce qu'on utilise comme catalyseur des bases d'ammonium quaternaires avec groupes alcoyle présentant 1 à 4 atomes de carbone ou des hydroxydes alcalins, et en ce qu'on opère en présence d'un solvant bouillant au-dessus de 100 °C de la classe des hydrocarbures aliphatiques saturés et aromatiques et des esters d'acides carboxyliques.

11. Procédé selon les revendications 1 à 10, caractérisé en ce que dans l'emploi d'un mélange initial dans lequel pour 100 parties en poids de (A) il y a moins de 10 parties en poids de (B), on utilise moins de 1,2 partie en volume, en particulier moins de 1 partie en volume de solvant par partie en poids de (A + B).

12. Procédé selon les revendications 1 à 11, caractérisé en ce qu'on poursuit la condensation jusqu'à ce que la viscosité du polymère à blocs, dans l'emploi de moins de 10 parties en poids de (B) par 100 parties en poids de (A), s'élève au moins à 400, de préférence au moins de 500 mPa · s (à 20 °C), et dans l'emploi de 10 parties en poids et davantage de (B) pour 100 parties en poids de (A), au moins à 300 mPa · s.

13. Procédé selon les revendications 1 à 12, caractérisé en ce que la température de réaction s'élève à 100-160 °C.

14. Procédé selon les revendications 1 à 12, caractérisé en ce que la durée de réaction s'élève à 6 à 20 heures.

15. Agents, préparés par les procédés selon les revendications 1 à 14.

16. Utilisation des agents préparés selon les revendications 1 à 14 comme inhibiteurs de mousse.

17. Utilisation des agents préparés selon les revendications 1 à 14, comme inhibiteur de mousse dans des agents de lavage, de rinçage et de nettoyage.

18. Utilisation des agents préparés selon les revendications 1 à 14, comme inhibiteur de mousse dans des agents de lavage séchés par pulvérisation.